# EUROPÄISCHE PATENTANMELDUNG

(11) **EP 1 371 440 A1**
(43) Veröffentlichungstag der Anmeldung: **17.12.2003**
(21) Anmeldenummer: 03012149.5
(22) Anmeldetag: 02.06.2003
(51) Int. Cl.: B23K 9/32, F17C 13/08

(54) **Schweissgerät mit einer Gasflasche**

(30) Priorität: 07.06.2002 DE 20208820 U
(71) Anmelder: Rehm GmbH & Co. KG, 73066 Uhingen (DE)
(72) Erfinder: Stumpp, Rolf, 73099 Adelberg (DE)
(74) Vertreter: Aldag, Wolfgang, Dipl.-Ing.

(57) **Zusammenfassung**

Die Erfindung betrifft ein Schweißgerät mit einer Gasflasche, bei dem die Gasflasche (2) die mechanische Grundkonstruktion des transportablen mit einer weiteren Bauteilen zur Steuerung und/oder Regelung versehenen Schweißgeräts (1) bildet. Bevorzugt ist die Gasflasche (2) mit einer Transportvorrichtung für das Schweißgerät (1) versehen ist und weist eine Halterung (4) auf, an der ein Steuergerät (3) und/oder sonstige Bauteile des Schweißgeräts (1) anbringbar sind.

## Beschreibung

### Stand der Technik

Die Erfindung betrifft ein Schweißgerät mit einer Gasflasche nach der Gattung des Hauptanspruchs.

Es ist bisher üblich, dass an Schweißgeräten, z.B. an sog. MIG/MAG-Maschinen, die hier notwendigen Gasflaschen angebaut werden. Und zwar wird die Gasflasche mechanisch so an das mit einer Transportvorrichtung versehene Gehäuse des Schweißgeräts angefügt, dass die Gasflasche mit dem Schweißgerät mittransportiert werden kann. Eie solche Anordnung ist beispielsweise aus der DE 693 03 135 T2 bekannt.

Aus der DE 30 21 132 C2 ist darüber hinaus ein Gerät zum Schweißen bekannt, das im wesentlichen aus einem Traggestell besteht, an dem die Gasflasche und weitere Zubehörteile gehalten sind. Die mechanische Grundkonstruktion wird hierbei durch das Traggestell mit einem teleskopisch verstellbaren Traggriff gebildet, wodurch zwar ein flexibler Transport des Geräts ermöglicht wird. Jedoch muss die gesamte Anordnung mechanisch relativ aufwendig aufgebaut sein um das Gewicht der Gasflasche und der weiteren Bauteile zu tragen.

Bei diesen Anordnungen ist zu beachten, dass die Kippsicherheit des Gehäuses des Schweißgeräts gewährleistet ist, da die gesamte Maschine mit der Gasflasche beispielsweise auch bei einer Schräglage von ca. 15° nicht umfallen darf, was bei dem nicht unerheblichen Volumen und dem Gewicht der Gasflasche einiger mechanische Vorkehrungen bedarf.

### Aufgabenstellung

Der Erfindung liegt die Aufgabe zugrunde, ein Schweißgerät mit einer Gasflasche derart zu verbessern, dass ein einfacher Aufbau möglich ist.

### Vorteile der Erfindung

Das eingangs erwähnte Schweißgerät mit einer Gasflasche ist erfindungsgemäß in vorteilhafter Weise so ausgebildet, dass die Gasflasche die mechanische Grundkonstruktion des transportablen mit weiteren Bauteilen, wie z.B. einer elektrischen, elektronischen oder sonstigen Steuerung, versehenen Schweißgeräts bildet. In besonders vorteilhafter Weise ist die Gasflasche mit einer Transportvorrichtung für das Schweißgerät versehen und weist eine Halterung auf, an der ein Steuergerät und/oder sonstige Bauelemente des Schweißgeräts anbringbar sind.

Das Schweißgerät nach der Erfindung ist in vorteilhafter Weise durch eine bei modernen Schweißgeräten immer kleinere Bauweise einiger Bauteile des Schweißgeräts ermöglicht, da die Elektronik der Steuergeräte in zunehmender Weise kleinbauend realisierbar ist; die Gasflaschen können jedoch aufgrund des benötigten Gasvolumens nicht kleiner oder leichter gebaut werden. Daher kann bei der Erfindung auf einfache Weise lediglich ein stand- und transportsicherer Aufbau der Gasflascheneinheit vorgesehen werden, an der z.B. das elektronische Steuergerät des Schweißgeräts mit einfachen Mitteln gehalten werden kann.

Die erfindungsgemäße Halterung ist vorzugsweise an einem Ende so gestaltet, dass sie an der Gasflasche gehalten ist und am anderen Ende ist sie mit einer Befestigungsvorrichtung zur Aufnahme des Steuergeräts und/oder sonstige Bauelemente des Schweißgeräts versehen, so dass das Steuergerät und/oder die sonstigen Bauelemente des Schweißgeräts seitlich an der Gasflasche zu liegen kommt.

Am einen Ende kann beispielsweise eine Ausnehmung zum Anhängen der Halterung an den Hals der Gasflasche vorhanden sein oder es ist eine entsprechen gestaltbare Vorrichtung zum Anhängen der Halterung an den Rumpf der Gasflasche vorhanden. Auf einfache Weise ist es auch möglich, dass am einen Ende eine magnetische Vorrichtung oder auch eine sonstige Klemmvorrichtung bzw. eine Vorrichtung mit Spannbändern angebracht ist, die als Halterung oder in Verbindung mit einer Halterung an der metallischen Gasflasche anbringbar ist.

Die Halterung kann in vorteilhafter Weise am anderen Ende mit einer Befestigungsvorrichtung zur Aufnahme des Steuergerät und/oder der sonstigen Bauelemente des Schweißgeräts versehen sein, die einen Auflage- oder Aufnahmeschenkel zur Aufnahme eines kompakten Gehäuses des Steuergeräts über eine Klemm-, Rast-, Schraub- oder sonstige mechanische oder auch magnetische Verbindung aufweist.

### Zeichnung

Die Erfindung wird anhand eines Ausführungsbeispiels des erfindungsgemäßen Schweißgeräts in der Zeichnung erläutert. Es zeigen:
Figur 1 eine erste Ansicht einer Halterung zur Aufnahme eines Steuergeräts für ein Schweißgerät und
Figur 2 eine zweite Ansicht der Halterung nach der Figur 1.

### Beschreibung des Ausführungsbeispiels

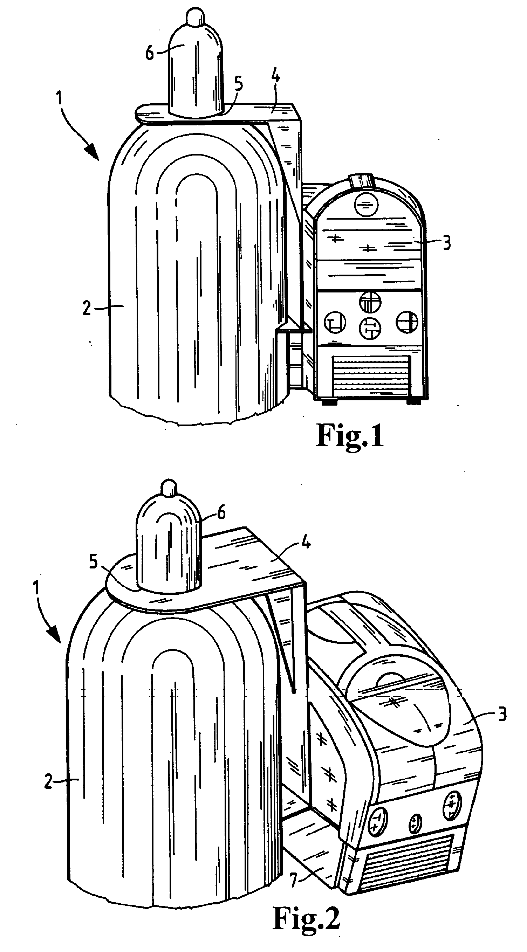

In Figur 1 ist ein Schweißgerät 1 gezeigt, das eine Gasflasche 2 und ein Steuergerät 3, z.B. mit einer Schweißstromquelle für eine MIG/MAG-Schweißmaschine, aufweist. Zur Aufnahme des Steuergeräts 3 an der Gasflasche 2 ist eine Halterung 4 vorhanden, wobei aus Figur 2 eine andere Ansicht des Schweißgeräts 1 mit den gleichen Bezugsziffern nach der Figur 1 ersichtlich ist.

Die Halterung 4 weist beim dargestellten Ausführungsbeispiel eine Ausnehmung 5 auf, mit der die Halterung 4 über einen Hals 6 der Gasflasche 2 gestülpt werden kann. Die Halterung 4 weist am anderen Ende 7 eine Befestigungsvorrichtung zur Aufnahme des Steuergerät 3 auf, die einen hier nur angedeuteten Auflage- oder Aufnahmeschenkel zur Aufnahme eines kompakten Gehäuses des Steuergeräts 3 über eine Klemm-, Rast-, Schraub- oder sonstige Verbindung aufweist.

Unter Berücksichtigung der Kippsicherheit des Schweißgeräts 1 sind hierbei auch viele andere Befestigungsvarianten mit entsprechend ausgestalteten Halterungen möglich, über die z.B. das elektronische Steuergerät des Schweißgeräts mit einfachen Mitteln an der Gasflasche 2 gehalten werden kann, so dass ein sicherer Sitz des an die Gasflasche 2 angefügten Bauelements und ein stand- und transportsicherer Aufbau der gesamten Gasflascheneinheit gewährleistet werden kann.

## Patentansprüche

1. Schweißgerät mit einer Gasflasche, bei dem
- die Gasflasche (2) die mechanische Grundkonstruktion des transportablen mit einer weiteren Bauteilen zur Steuerung und/oder Regelung versehenen Schweißgeräts (1) bildet.

2. Schweißgerät nach Anspruch 1, **dadurch gekennzeichnet, dass**
- die Gasflasche (2) mit einer Transportvorrichtung für das Schweißgerät (1) versehen ist und eine Halterung (4) aufweist, an der ein Steuergerät (3) und/oder sonstige Bauteile des Schweißgeräts (1) anbringbar sind.

3. Schweißgerät nach Anspruch 2, **dadurch gekennzeichnet, dass**
- die Halterung (4) an einem Ende mit einer Befestigungsvorrichtung (5) zur Aufnahme an der Gasflasche (2) und am anderen Ende (7) mit einer Befestigungsvorrichtung zur Aufnahme des vorrichtung zur Aufnahme des Steuergeräts (3) und/oder sonstiger Bauelemente des Schweißgeräts (1) versehen ist, so dass das Steuergerät (3) und/oder die sonstigen Bauelemente des Schweißgeräts (1) seitlich an der Gasflasche (2) zu liegen kommen.

4. Schweißgerät nach Anspruch 3, **dadurch gekennzeichnet, dass**
- am einen Ende eine Ausnehmung (5) zum Anhängen der Halterung (4) an den Hals (6) der Gasflasche (2) vorhanden ist.

5. Schweißgerät nach Anspruch 3, **dadurch gekennzeichnet, dass**
- am einen Ende eine Vorrichtung zum Anhängen der Halterung an den Rumpf der Gasflasche (2) vorhanden ist.

6. Schweißgerät nach einem der Ansprüche 3 bis 5, **dadurch gekennzeichnet, dass**
- am einen Ende eine magnetische Vorrichtung angebracht ist, mit der die Halterung an der metallischen Gasflasche (2) anbringbar ist.

7. Schweißgerät nach einem der Ansprüche 3 bis 5, **dadurch gekennzeichnet, dass**
- am einen Ende eine Klemmvorrichtung angebracht ist, mit der die Halterung an der metallischen Gasflasche (2) anbringbar ist.

8. Schweißgerät nach einem der Ansprüche Anspruch 3 bis 5, **dadurch gekennzeichnet, dass**
- am einen Ende eine Vorrichtung mit einem Spannband angebracht ist, mit der die Halterung an der metallischen Gasflasche (2) anbringbar ist.

9. Schweißgerät nach einem der vorhergehenden Ansprüche, **dadurch gekennzeichnet, dass**
- die Halterung (4) am anderen Ende (7) mit einer Befestigungsvorrichtung zur Aufnahme des Steuergerät (3) und/oder sonstige Bauelemente des Schweißgeräts (1) versehen ist, die einen Auflage- oder Aufnahmeschenkel zur Aufnahme eines kompakten Gehäuses des Steuergeräts (3) über eine Klemm-, Rast-, Schrauboder sonstige Verbindung aufweist.
